# EUROPEAN PATENT APPLICATION

(11) **EP 3 656 198 A1**
(43) Date of publication of application: **27.05.2020**
(21) Application number: 19020586.4
(22) Date of filing: 18.10.2019
(51) Int. Cl.: A01B 69/04, A01B 69/00, B62D 1/28

(54) **SYSTEM AND METHOD OF AUTOMATIC STEERING AN AGROFORESTRY EQUIPMENT**

(30) Priority: 26.11.2018 RO 201800954
(71) Applicant: Institutul National de Cercetare Dezvoltare pentru Masini si Instalatii destinate Agriculturii si Industriei Alimentare-INMA, Bucuresti (RO)
(72) Inventor: Marin, Eugen, Bucuresti (RO); Mateescu, Marinela, Bucuresti (RO); Manea, Dragos, Bucuresti (RO); Gheorghe, Gabriel-Valentin, Mizil (RO)
(74) Representative: Strenc, Alexandru Cristian

(57) **Abstract**

The invention relates to a system and the method of automatic steering for windbreaks establishing agroforestry equipment, intended for the automatic on row driving of the aggregates, which are formed by an wheeled agricultural tractor and a planting equipment, for the execution of the forest seedlings planting in the field in a square (the distances are equal both in the row and between rows), or in a rectangle (between rows the distance is greater and in the row the distances are smaller).

The automatic steering system for agroforestry windbreaks establishing equipment is composed of guidance system **(A)** based on the geolocation satellite technology-GPS, or, when the GPS is not accessible, on guidance system **(B)** made up of the video camera **(1),** the data storage and analysis unit **(2)** with special algorithms with defined functions, the operating terminal **(3)** with the touchscreen **(4)** and the programmable logic controller **(5),** the speed sensor **(6)** mounted on the agricultural tractor from the aggregate, the position sensor **(7)** mounted on the planting mechanism **(8),** the data processing unit **(9),** the signalling system **(10)** equipped with the acoustic warning **(a)** mounted on the planting equipment **(11)** and luminous **(b)** mounted in the tractor cab, so that the planting of the forest seedlings in squares or rectangles can be carried out with maximum precision.

## Description

The invention relates to a system and the related method of automatic steering for windbreaks establishing agroforestry equipment, intended for the automatic on row driving of the aggregates, which are formed by a wheeled agricultural tractor and a planting equipment, for the execution of the forest seedlings planting in the field, in a square, respectively when the distances are equal both in the row and between rows, or in a rectangle, when between rows the distance is greater and in the row the distances are smaller.

There are known, from the literature, automatic systems and methods of on row driving of some agricultural machines, where the tracking of the row is performed with the help of mechanical probes mounted on the machines frame and which have the following working principle: they notice the deviations of the row by means of a rod which moves the drawer of a hydraulic distributor in one direction or another so that the oil flow in the system acts the rod of the linear hydraulic cylinder having the effect of maintaining the wheel of the tractor from the aggregate in the desired direction of travel and trajectory.

These systems have the disadvantage that in the hydraulic installations, due to the fact that the piston of the cylinder is in a continuous movement and in contact with the air, changes in the properties of the working fluids appear and tend to deteriorate much faster with the increase of temperature, which leads to affecting the distances between trees in the row, as well as between rows, and to the adoption of special maintenance measures, thus increasing the costs of performing the planting operation.

Also known is the automatic steering system described in US Patent Document 20110118926 Method and system for augmenting a guidance system with a path sensor, based on processing the information obtained from the satellite with the information from the road sensors. The presented solution has a high complexity and has the disadvantage of a deficient functionality in difficult environmental conditions or when satellite information is lost.

The technical problem, solved by the invention, consists in creating an automatic on row steering system for windbreaks establishing equipment, simple and reliable based on the flexible use of GPS satellite tracking technology or in conditions of its inaccessibility or difficult weather conditions, which ensures the planting in squares, or rectangles by the unit on which they are mounted.

The automatic steering system for agroforestry windbreaks establishing equipment, according to the invention, solves this technical problem and eliminates the mentioned disadvantages, by having a guidance system based on the geolocation satellite technology (GPS) that is capable of generating virtual lines to be followed by the mechanic or a video system with the attachment of sensors when the GPS is not accessible, which allows to know the position of the machine and to keep it on a precise and repeatable trajectory, even in difficult weather conditions, because it takes the visual images from the camcorder together with the other information from the sensors to be processed by special algorithms with functions that establish a specific route on the working plot, notifying the mechanic for steering the tractor from the aggregate towards the programmed destination and the operator for positioning the forest seedling in the planting mechanism, so that it can be planted in squares or rectangles.

The automatic steering system for agroforestry windbreaks establishing equipment, according to the invention, has the following advantages:
- increases the precision in carrying out the semi-mechanized planting work of forest seedlings in processed land;
- considerably reduces expenses and leads to better planting quality;
- provides forest seedlings with better conditions for direct light capture and root distribution in the nutrition space.

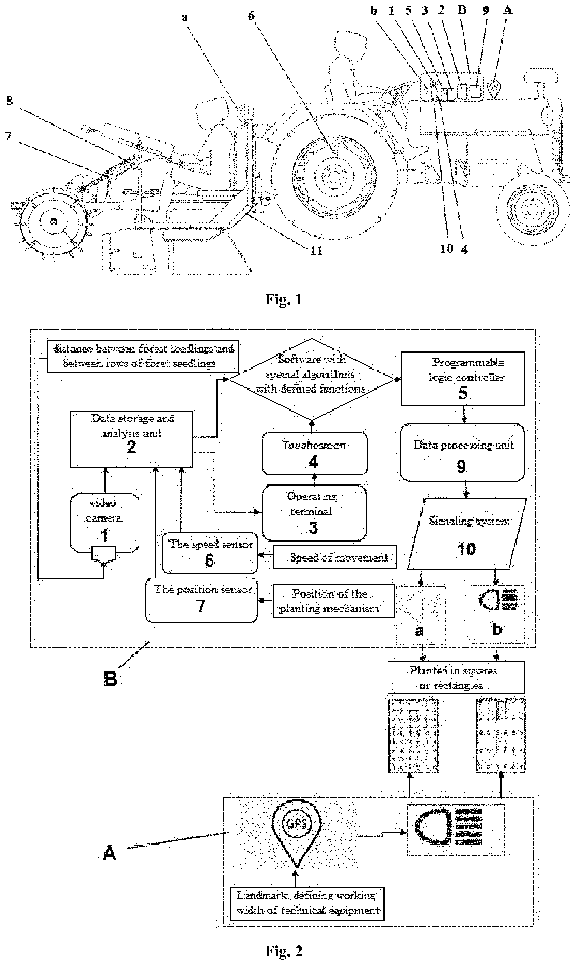

The following is an example of embodiment of the invention in relation to Figures 1 ÷ 2, which represent:
Fig. 1 - Automatic steering system for agroforestry windbreaks establishing equipment - scheme of location on the agricultural tractor and equipment
Fig. 2 - Automatic steering system for agroforestry windbreaks establishing equipment - functional scheme

The automatic steering system for agroforestry windbreaks establishing equipment is composed of guidance system **A** based on the geolocation satellite technology-GPS, or, when the GPS is not accessible, on guidance system **B** made up of the video camera **1**, the data storage and analysis unit **2** with special algorithms with defined functions, the operating terminal **3** with the touchscreen **4** and the programmable logic controller **5**, the speed sensor **6** mounted on the agricultural tractor from the aggregate, the position sensor **7** mounted on the planting mechanism **8**, the data processing unit **9**, the signalling system **10** equipped with the acoustic warning **a** mounted on the planting equipment **11** and luminous **b** mounted in the tractor cab, so that the planting of the forest seedlings in squares or rectangles can be carried out.

The guidance method implemented with the help of the system is based on the generation by the guidance system **A** based on the geolocation satellite technology-GPS, starting from a straight landmark line and from defining the working width of the equipment, of some virtual lines that will be followed by the mechanic in the working plot. In the absence of a GPS signal or limited processing capabilities of the GPS system, guidance system **B** intervenes, which allows to know the position of the machine and to keep it on a precise and repeatable trajectory, even in difficult weather conditions, depending on the visual images taken by the video camera and the other information received from the sensors, processed by special algorithms with defined functions, establishes a certain route on the working plot, orientates the equipment to the programmed destination and notifies the operator to position the forest seedlings in the planting mechanism, thus carrying out the execution of planting the forest seedlings in a field processed in a square, in which the distances are equal both in the row and between rows, or in a rectangle, when between rows the distance is greater and in the row the distances are smaller.

## Claims

1. The automatic steering system for agroforestry windbreaks establishing equipment, which has a guidance system **(A)** based on the geolocation satellite technology-GPS, and, when the GPS is not accessible, another video guidance system **(B),** auxiliary working mechanisms and bodies, **characterized in that** the guide system **(B)** has a video camera **(1)**, the data storage and analysis unit **(2)** with special algorithms with defined functions, the operating terminal **(3)** with the touchscreen **(4)** and the programmable logic controller **(5)**, the speed sensor **(6)** mounted on the agricultural tractor and the position sensor **(7)** mounted on the planting mechanism **(8)**, the data processing unit **(9)**, the signalling system **(10)** equipped with the acoustic warning **(a)** mounted on the planting equipment **(11)** and luminous **(b)** mounted in the tractor cab, so that the planting of the forest seedlings in squares or rectangles can be carried out with maximum precision.

2. The method of guiding the equipment for establishing agricultural windbreaks implemented with the help of the system of claim 1, **characterized in that** it involves the following steps:
- defining, in the guidance system A based on the satellite guidance technology, the working width of the equipment;
- generating, in the working plot, virtual lines for tracking by the aggregate;
- defining, in case of lack of GPS signal or of its limited processing capacity due to the weather conditions, in the video guidance system B, the working parameters of the forestry windbreak, respectively the distance between the trees in a row and the distance between rows;
- the continuous processing of the movement speed of the agricultural equipment and of the planting mechanism position, measured with the corresponding sensors and that together with the acoustic and video signals, leads to the framing of the working aggregate in the parameters of the forest network;
- establishing the optimal route on the working plot, orienting the equipment to the programmed destination and directing the operator to position the forest seedlings in the planting mechanism.
